# EUROPEAN PATENT APPLICATION

(11) **EP 2 584 467 A1**
(43) Date of publication of application: **24.04.2013**
(21) Application number: 10853248.2
(22) Date of filing: 17.06.2010
(51) Int. Cl.: G06F 11/00

(54) **TECHNOLOGY FOR UPDATING ACTIVE PROGRAM**

(71) Applicant: Fujitsu Limited, Kawasaki-shi, Kanagawa 211-8588 (JP)
(72) Inventor: KOJIMA, Kazumi, Kawasaki-shi, Kanagawa 211-8588 (JP)
(74) Representative: HOFFMANN EITLE
(86) International application number: PCT/JP2010/060316
(87) International publication number: WO 2011/158367

(57) **Abstract**

A program to be updated is identified among plural programs stored in a storage device in response to a program update instruction, and a replacement process that is a process corresponding to the identified program to be updated and is included in plural processes activated by executing the plural programs and a communication destination process that has communicated with the replacement process and is included in the plural processes are extracted. Then, in response to updating with update data including a new program of the identified program to be updated, the new program is loaded onto a work memory to activate a first process to be substituted for the replacement process, and a second process to be substituted for the extracted communication destination process is activated. Furthermore, communication connection relationships associated with the replacement process and the communication destination process is disconnected, and communication connection relationship associated with the first process and the second process is built, and the replacement process and the communication destination process are terminated. Thus, program update can be reflected without rebooting.

## Description

### Technical Field

This technique relates to a technique for updating a program being executed.

### Background Technology

Conventionally, when updating a firmware that is recorded in a rewritable non-volatile memory that is duplicated on an operating side and standby side, a procedure such as described below was performed. In other words, (1) a firmware on the standby side is updated; (2) the standby side is switched to become the operating side, and after rebooting, the new firmware is started; and (3) the firmware of the old operating side that was switched to become the standby side is updated. When updating the firmware in this way, rebooting is executed, so the functions of the firmware are temporarily unusable.

In order to solve this kind of problem, in a large-scale apparatus, a system control board having a rewritable non-volatile memory in which the firmware is recorded may be duplicated. In other words, a control board for an operating system and a control board for a standby system are prepared, and the firmware in the control board for the standby system is updated, then after starting the updated firmware, the control board for the standby system is switched to become the operating system. After that, the firmware in the control board for the old operating system, which was switched to become the control board for the standby system, is updated, after which the updated firmware is started. In this way, it is possible to eliminate the time during which system control is not possible, however, the cost increases.

On the other hand, there is a first conventional technique for replacing a program without stopping and disappearing a service process. In this first conventional technique, a module management routine manages the first number of times that a certain program module is called, the second number of times that the certain program module calls another module, and data regarding an replacement instruction. When the module management routine determines, from the first and second numbers of times, that it is possible to replace a module for which the replacement is instructed based on the these data, the module management routine activates a new service process by replacing the module for which the replacement is instructed with an updated module. However, a function call or the like is made between service processes through the module management routine, and a problem in which the communication protocol or the like is changed after the module update is not taken into consideration. Moreover, this processing is performed in the Operating System (OS) layer, and the OS layer is modified.

Moreover, there is also a second conventional technique for causing a service to continue as it is without replacing files of modules for which there is no change between the new and old files. More specifically, a configuration is employed in which a virtual server OS is placed on a basic OS, and a virtual host is activated on the virtual server OS. Then, when updating a module on the virtual client OS of a virtual host, a new virtual host is generated, and a new module is activated on the virtual client OS. After that, the virtual server OS performs a processing for switching relay destinations of messages and the like. However, in such a method in which the virtual host is duplicated, the load is high. Moreover, the virtual server OS relays messages, so there is no direct communication between the virtual hosts. In other words, the problem in which the communication protocol is changed after updating the module is not taken into consideration. Furthermore, these processes are performed on the virtual server OS, so the OS is modified.

Patent Document 1: Japanese Laid-open Patent Publication H8-95771
Patent Document 2: Japanese Laid-open Patent Publication 2004-220151
Patent Document 3: Japanese Laid-open Patent Publication 2007-226437
Patent Document 4: Japanese Laid-open Patent Publication H7-104992

### Summary of the Invention

### Problem to be solved by this Invention

Therefore, as one aspect, an object of this technique is to provide a new technique for updating a program being executed without rebooting.

### Means for solving the Problem

A program update method relating to one aspect of this technique includes: (A) identifying a program to be updated among plural programs stored in a storage device in response to a program update instruction; (B) extracting a replacement process that is a process corresponding to the identified program to be updated and is included in plural processes activated by executing the plural programs and a communication destination process that has communicated with the replacement process and is included in the plural processes; (C) in response to updating with update data including a new program of the identified program to be updated, loading the new program onto a work memory to activate a first process to be substituted for the replacement process, and activating a second process to be substituted for the extracted communication destination process; (D) disconnecting communication connection relationships associated with the replacement process and the communication destination process, and building communication connection relationship associated with the first process and the second process; and (E) terminating the replacement process and the communication destination process.

### Brief description of the drawings

FIG. 1 is a system outline diagram in this embodiment;
FIG. 2 is a diagram depicting an example of program modules recorded on a non-volatile memory;
FIG. 3 is a diagram depicting a configuration example of processes;
FIG. 4 is a schematic diagram representing a configuration and relationship of activated processes;
FIG. 5 is a diagram depicting an example of a process configuration management table;
FIG. 6 is a diagram to explain meanings of grouping codes used in the process configuration management table;
FIG. 7 is a diagram depicting an example of communication history data;
FIG. 8 is a diagram depicting a processing flow in this embodiment;
FIG. 9 is a diagram schematically depicting a selection state of processes to be reactivated;
FIG. 10 is a schematic diagram to explain a configuration and processing of the activated processes;
FIG. 11 is a diagram depicting a processing flow of a communication switching processing;
FIG. 12 is a schematic diagram to explain the configuration and processing of the activated processes;
FIG. 13 is a diagram depicting a processing flow in this embodiment;
FIG. 14 is a schematic diagram to explain the configuration and processing of the activated processes; and
FIG. 15 is a diagram depicting an example of the communication history data after clearing.

### Best mode for carrying out the invention

In the following, an embodiment in which a firmware that is stored in a rewritable non-volatile memory (for example, a NAND flash memory) is updated will be explained as one example.

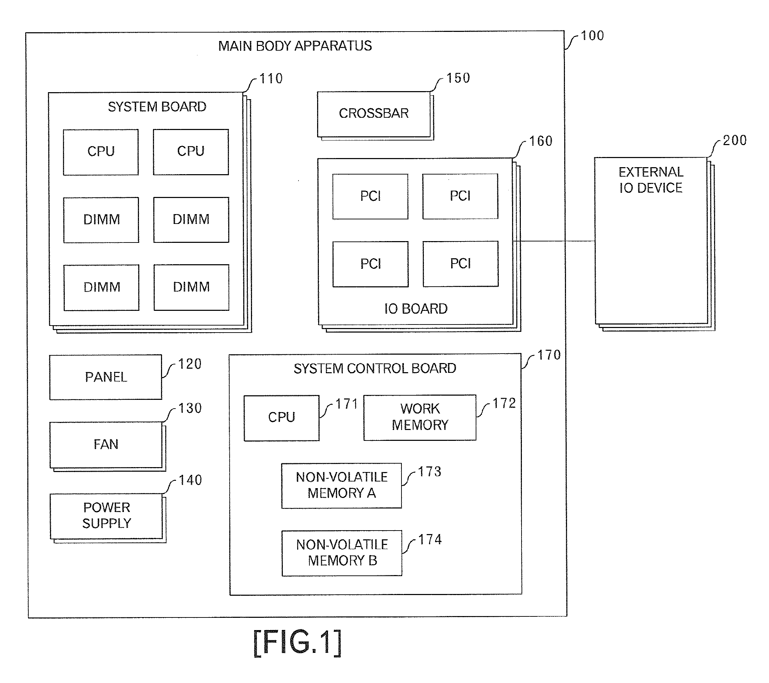

FIG. 1 illustrates a system configuration of a hardware in this embodiment. For example, a server relating to this embodiment includes a main body apparatus 100 of the server, external 10 devices 200 and the like, which are connected to the main body apparatus 100. The external 10 device 200 is connected as necessary.

This main body apparatus 100 has (A) one or plural system boards 110, (B) a panel 120 for displaying the status of the main body apparatus 100 and the like, (C) one or plural fans (FAN) 130 for cooling the apparatus, (D) one or plural power supplies 140, (E) one or plural crossbars 150 for connecting to a network, (F) one or plural IO boards 160, and (G) a system control board 170 that performs overall control of the main body apparatus 100.

The system board 110 includes one or plural CPUs (Central Processing Units), and one or plural DIMMs (Dual Inline Memory Modules), which are one or plural memory modules. The system board 110 is a board that is controlled by the system control board 170.

The IO board 160 may be used for connecting with the external IO device 200, for example, and may have one or plural PCI (Peripheral Component Interconnect) boards.

The system control board 170 has a CPU 171 that is a processor, a work memory 172 that stores a program (here, a firmware) executed by the CPU 171 and data related to the processing, and duplicated non-volatile memories AandB (173 and 174). Thenon-volatilememoriesAandB (173 and 174) arere-writable non-volatile memories, and one of these is used as the operating side (or operational side) and the other one is used as the standby side. The same program that is executed by the CPU 171 is recorded in the non-volatile memories A and B (173 and 174). It is not illustrated in the figure, however, a mechanism is provided in the system control board 170 for acquiring data for re-writing the non-volatile memories A and B (173 and 174).

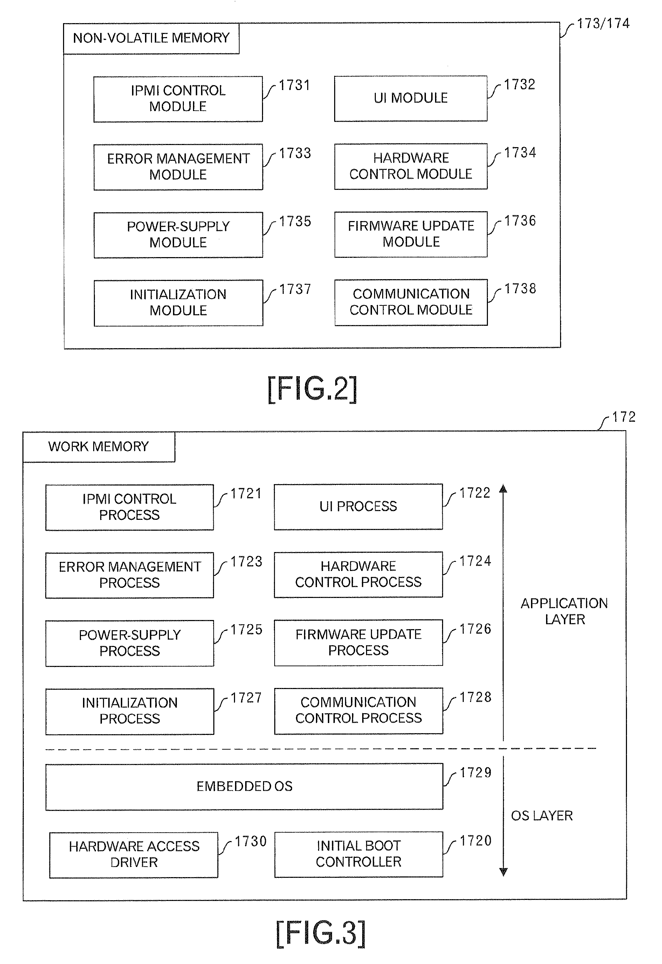

FIG. 2 illustrates examples of program modules that are recorded in the non-volatile memories A and B (173 and 174). In this example, an IPMI (Intelligent Platform Management Interface) module 1731, a UI (User Interface) module 1732, an error management module 1733, a hardware control module 1734, a power-supply control module 1735, a firmware update module 1736, an initialization module 1737, a communication control modules 1738 and other program modules are stored in the non-volatile memories A (173) and B (174). Moreover, modules for the OS and drivers, and library modules that are used by the modules illustrated in FIG. 2 may also be recorded in the non-volatile memories A and B (173 and 174).

FIG. 3 illustrates a process configuration example of programs loaded onto the work memory 172 when the system control board 170 is activated.

For example, the OS layer includes an embedded OS 1729, a hardware access driver 1730 for accessing the hardware and an initial boot controller 1720. Moreover, as corresponding to the modules illustrated in FIG. 2, the application layer includes an IPMI control process 1721, a UI process 1722, an error management process 1723 , a hardware control process 1724, a power-supply control process 1725, a firmware update process 1726, an initialization process 1727 and a communication control process 1728.

In this embodiment, the module update is conducted by just using the application layer without modifying the OS layer and rebooting. Therefore, in the following explanation, the minimum explanation will be made for the OS layer.

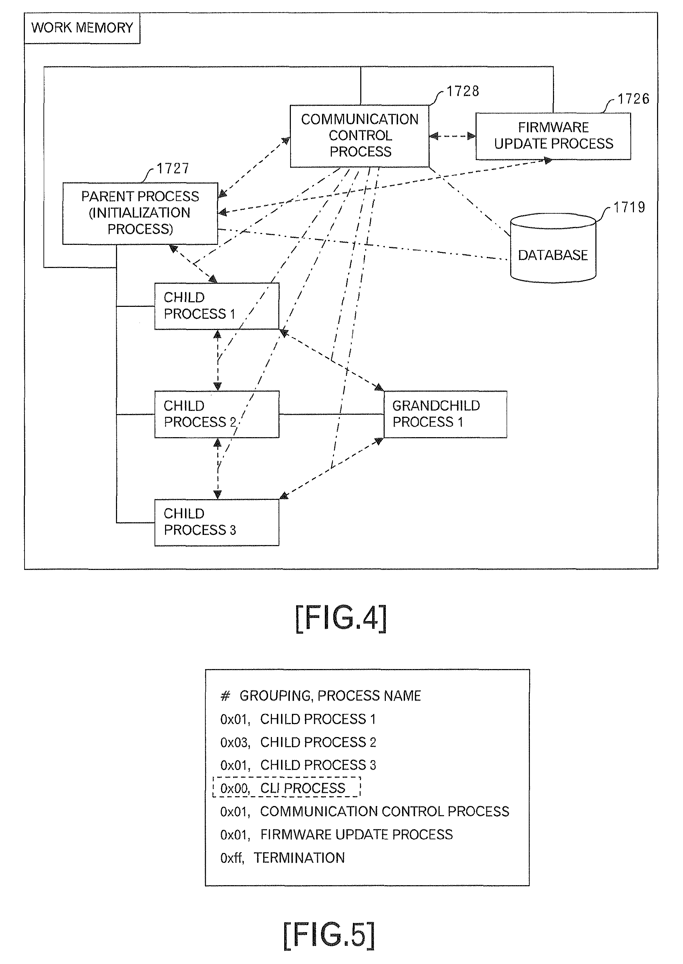

Furthermore, in this embodiment, as illustrated in FIG. 4, when a parent process, which is the initialization process 1727, for example, is loaded onto the work memory 172 during initial startup by the initial boot controller 1720oftheOSlayer, for example, the communication control process 1728, firmware update process 1726 and other processes (child processes 1 to 3 in FIG. 4) are activated as child processes. A child process (for example, child process 2) may also invoke a grandchild process 1.

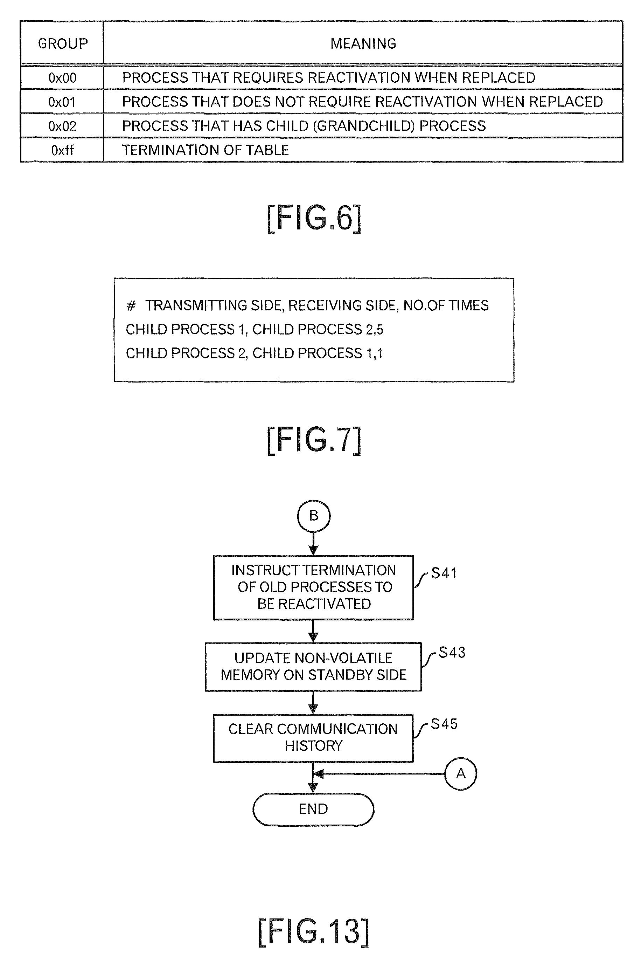

Whentheparentprocess1727invokeschildprocesses, the parent process 1727 generates and manages a process configuration management table such as illustrated in FIG. 5, for example, according to the activation status of the child processes in a database 1719 on the work memory 172. In the example in FIG. 5, in the process configuration management table, grouping codes and process names are correlated and registered. The meanings of the grouping codes are illustrated in FIG. 6, for example. As illustrated in FIG. 6, in this example, the grouping code has a meaning in bit units. In other words, the Least Significant Bit (LSB) represents whether or not it is necessary to reactivate a module after replacing the module. More specifically, when the bit is ON, the reactivation is required, and when the bit is OFF, the reactivation is not required. The second bit from the LSB represents whether or not the process has a child process (a grandchild process as seen from the parent process) . More specifically, when the bit is ON, the process has a child process, and when the bit is OFF, the process does not have a child process. All of the bits being ON represents termination.

In this way, when data such as illustrated in FIG. 5 is stored, child processes 1 and 3, communication control process 1728 and firmware update process 1726 are processes that require reactivation after replacing the module. The child process 2 requires the activation after replacing the module, and has a child process. A CLI (Command Line Interface) process is a kind of UI process, and is a transient process that is reactivated as needed, so it is a process that does not require the reactivation after replacing the module. In the case of the transient process such as this, the process is registered in the process configuration management table after being activated, and is deleted from the process configuration management table when terminated. In FIG. 5, the CLIprocess is illustrated for explanation purposes, however, this portion does not correspond to FIG. 4.

Whether or not a child process of a child process (grandchild process as seen from the parent process 1727) is generated is known by the parent process 1727, for example. To determine which process is a grandchild process, a process configuration management table such as illustrated in FIG. 5 is only prepared for the child process as a reference.

Furthermore, the communication control process 1728 manages the communication connection relationship and the communication between the processes. In order to execute the following processing, the communication control process 1728 stores communication history data in the database 1719. For example, the communication history data such as illustrated in FIG. 7 is stored. In the example in FIG. 7, the process name on the transmitting side, the process name on the receiving side and the number of times are correlated and stored. A distinction is made between the transmitting side and the receiving side, so in the case of the bi-directional communication, separate records are recorded. In the following processing, only whether the communication exists between the processes is checked, so each pair of processes may be recorded without making a distinction between the transmitting side and the receiving side.

The interprocess communication in this embodiment is the interprocess communication that uses a socket, for example. The interprocess communication that uses the socket is well known, so a detailed explanation is not given here. In this example, as for processes that require the interprocess communication, it is presumed that the communication connection relationship based on the socket is established beforehand. Therefore, even though there is a communication connection relationship, it is not possible to determine whether or not data communication was actually performed without checking the history data of data communication such as illustrated in FIG. 7. In the example in FIG. 7, there was data communication between the child process 1 and the child process 2, so records are recorded in the communication history data. On the other hand, as illustrated in FIG. 4, there is a communication connection relationship between the child process 2 and the child process 3, however, there are no records in FIG. 7, so data communication has not been performed.

In FIG. 4, the parent process 1727, the communication control process 1728 and the firmware update process 1726 perform the following processing while communicating with each other. In FIG. 4, dotted lines represent the interprocess communication, and dot-dash lines represent monitoring of the interprocess communication by the communication control process 1728.

Furthermore, it is not illustrated in FIG. 4, however, processes other than the parent process 1727 and the communication control process 1728 may also leave data in the database 1719.

Furthermore, the firmware update process 1726 is a process that outputs update data related to a re-write instruction for the non-volatile memories A and B (173 and 174) to a non-volatile memory re-write driver that is included in the hardware access driver 1730 in the OS layer, for example, in response to an instruction from the UI process 1722 or the like, and causes the non-volatile memory re-write driver to perform the update of the firmware.

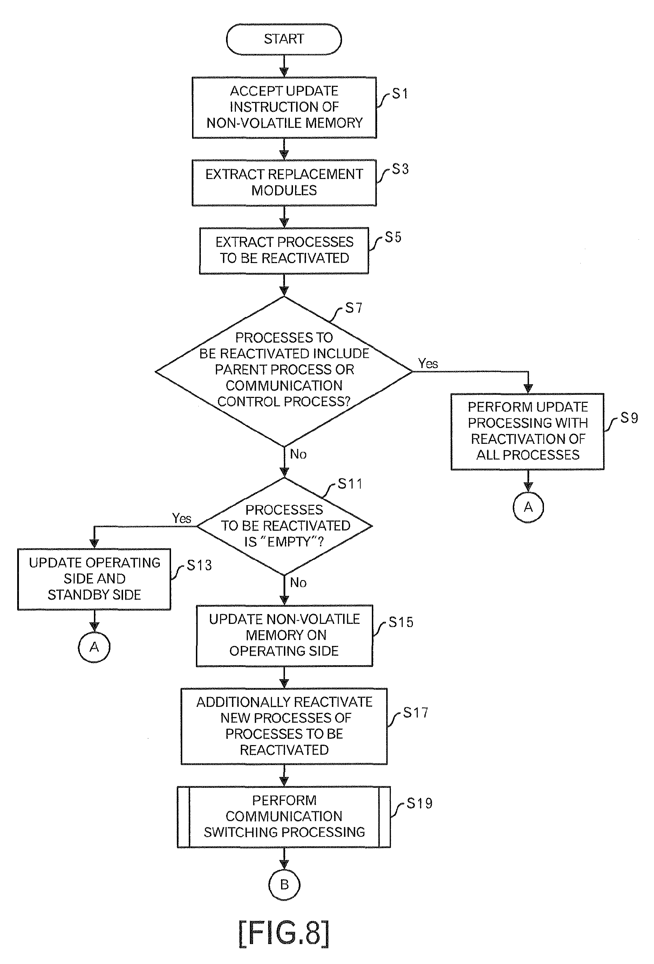

In the following, the processing for the firmware update will be explained in detail using FIG. 8 to FIG. 15.

First, the UI process 1722 or the like accepts an update instruction for the non-volatile memories A and B (173 and 174) from an administrator or the like, and notifies the firmware update process 1726 of update data and an update instruction (step S1). Even when only part of the modules is updated, the update data includes data for all modules such as illustrated in FIG. 2. As a result, the firmware update process 1726 extracts replacement modules, which are modules to be updated, from the received update data (step S3). For example, the firmware update process 1726 performs a binary comparison for all of the modules illustrated in FIG. 2, and extracts modules having differences as replacement modules. Moreover, when performing revision management using revision history files or the like, the firmware update process 1726 determines whether or not there are any differences in the revision number for each module, and when there are differences, the firmware update process 1726 identifies the modules having the differences in the revision number as replacement modules.

After the replacement modules have been extracted, the firmware update process 1726 notifies the communication control process 1728 of the module names (or process names that correspond to the replacement modules) . The communication control process 1728 extracts processes to be reactivated from the process names of processes that correspond to the replacement modules, the process configuration management table and communication history data that are stored in the database 1719 (step S5).

More specifically, the communication control process 1728 checks whether ON has been set to the bit in the process configuration management table, which represents "reactivation is required" for the processes corresponding to the replacement modules (hereafter, called replacement processes), and when ON is set to the bit that represents "reactivation is required", the communication control process 1728 identifies that process as a process to be reactivated. On the other hand, when OFF is set to the bit representing "reactivation is required", the process is not identified as a process to be reactivated. For example, in case of the transient process like the CLI process, it is assumed that such a process is activated when necessary, so the update will be reflected at the next reactivation.

Furthermore, the communication control process 1728 checks, from the communication history data, whether there is a record including the replacement process, as the transmitting side or the receiving side, and identifies the communication destination process that is the corresponding receiving side process or transmitting side process, as a process to be reactivated. This is because, for the interprocess communication for which the communication has already been performed, when the protocol changes due to the update of the modules, suitable interprocess communication may not be able to be performed by just changing the socket. On the other hand, when data communication has not been performed even though there is a communication connection relationship, there is no problem in just resetting the communication connection relationship, so for a connection destination process for which there are no communication history records in the communication history data, the process is not identified as a process to be reactivated.

When a dynamic library is used, and the dynamic library is a replacement module, a process that is linked to that library is identified as a process to be reactivated. Therefore, data that expresses the link relationship between the dynamic library and the process is stored in the database 1719. The communication control process 1728 checks this kind of data and identifies processes to be reactivated.

Moreover, the communication control process 1728 checks whether ON is set to the bit in the process configuration management table, which represents that the process to be reactivated has a child process (in other words, grandchild process) . When ON is set to the bit that represents that there is a child process for the process to be reactivated, the grandchild process is also identified as a process to be reactivated. It is possible to identify a grandchild process by storing a process configuration management table for the child process having the grandchild process in the database 1719.

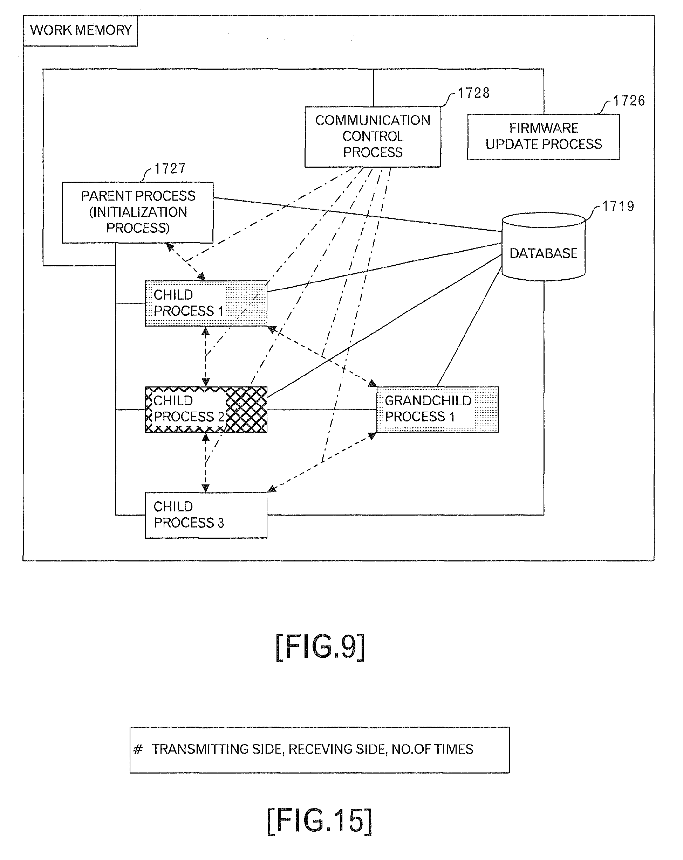

For example, after the child process 2 is identified as a replacement process and the data illustrated in FIG. 5 and FIG. 7 is stored in the database 1719, the child processes 1 and 2 and the grandchild process 1 are extracted as processes to be reactivated as illustrated by the hatching in FIG. 9. As illustrated by the dotted line, a communication connection relationship is set for the child process 2 and child process 3, however, there is no history of communication in the communication history data in FIG. 7, so this relationship will merely be reset later.

Returning to the explanation of the processing in FIG. 8, the communication control process 1728 determines whether the processes to be reactivated include the parent process 1727 or the communication control process 1728 (step S7). When the parent process 1727 or communication control process 1728 is a process to be reactivated, the change is large and the processing of this embodiment cannot be adequately executed. Therefore, a conventional update process that includes reactivating all processes (in other words, rebooting) is performed (step S9). For example, after the non-volatile memory B (174), which is the standby side, is updated, the standby side is switched to the operating side and rebooting is performed, thenafterthat, theoldoperating side that was switched to become the standby side is updated. The step S9 is the same as in conventional processing, however, another method could also be employed. The processing then ends by way of a terminal A.

The replacement process may be the firmware update process 1726. The firmware update process 1726 performs a predetermined role in the following processing in this embodiment, however, that role and related functions are less than those of the communication control process 1728 and the parent process 1727. Therefore, even when the replacement process is the firmware update process 1726, the processing does not move to the step S9.

On the other hand, when the processes to be reactivated do not include the parent process 1727 or the communication control process 1728, the communication control process 1728 checks whether the process to be reactivated is "empty" (step S11). When only a transient process such as a CLI process is a replacement process or a communication destination process, module update is performed, however, the process to be reactivated becomes "empty". Therefore, when the process to be reactivated is "empty", the communication control process 1728 causes the firmware update process 1726 to update the non-volatile memory A (173) on the operating side, then after that, the communication control process 1728 causes the firmware update process 1726 to update the non-volatile memory B (174) on the standby side (step S13). There is no problem even if the order is reversed. In either case, the process is not reactivated, and the new module is activated at the next activation. The processing then ends by way of the terminal A.

On the other hand, when the process to be reactivated is not "empty", the communication control process 1728 instructs the firmware update process 1726 to update the non-volatile memory A (173) on the operating side. Moreover, the communication control process 1728 notifies the parent process 1727 of the process name of the process to be reactivated. The firmware update process 1726 instructs the hardware access driver 1730 or the like in the OS layer to update the non-volatile memory A (173) on the operating side with the update data in response to the instruction from the communication control process 1728 (step S15). This step itself is the same as in the conventional case, so no further explanation is given.

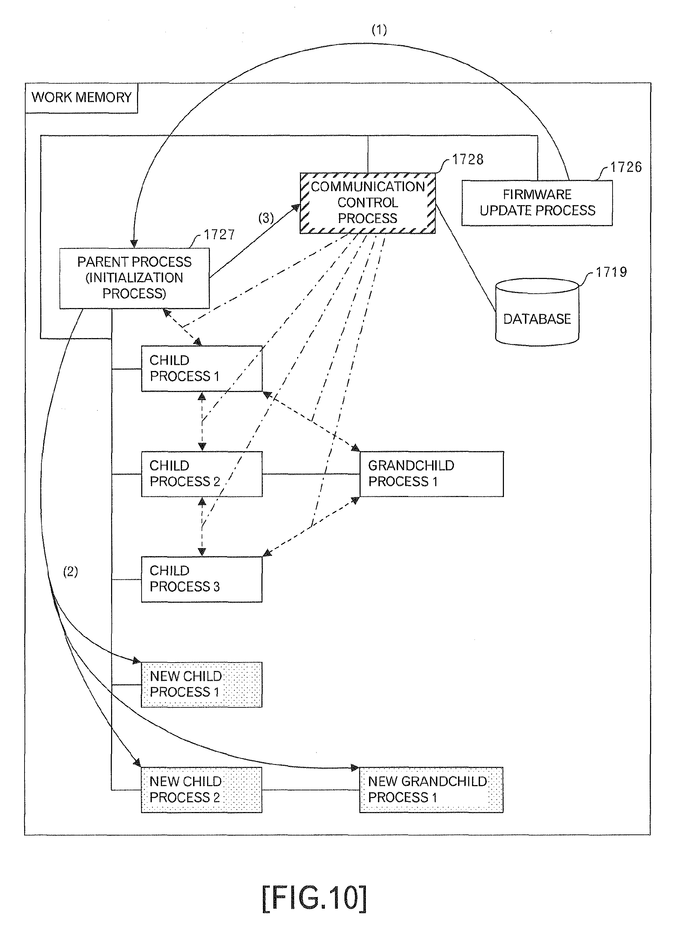

After the update of the non-volatile memory A (173) on the operating side is complete, the firmware update process 1726 notifies the parent process 1727 that the update is complete. In response to the update completionnotification, the parent process 1727 additionally activates new processes of the processes to be reactivated (step S17). As schematically illustrated in FIG. 10, when the firmware update process 1726 has notified the parent process 1727 that the update is complete (step (1)), modules corresponding to processes to be reactivated other than replacement modules and replacement processes are loaded onto the work memory. 172, then the parent process 1727 additionally activates the new processes of the processes to be reactivated, in other words, the new processes of the child process 1, child process 2 and grandchild process 1 (step (2)). When the activation of these processes is complete, the process activation status as illustrated in FIG. 10 is reflected to the process configuration management table in the database 1719. By completing this activation, the parent process 1727 outputs the activation completionnotification to the communication control process 1728 (step (3)).

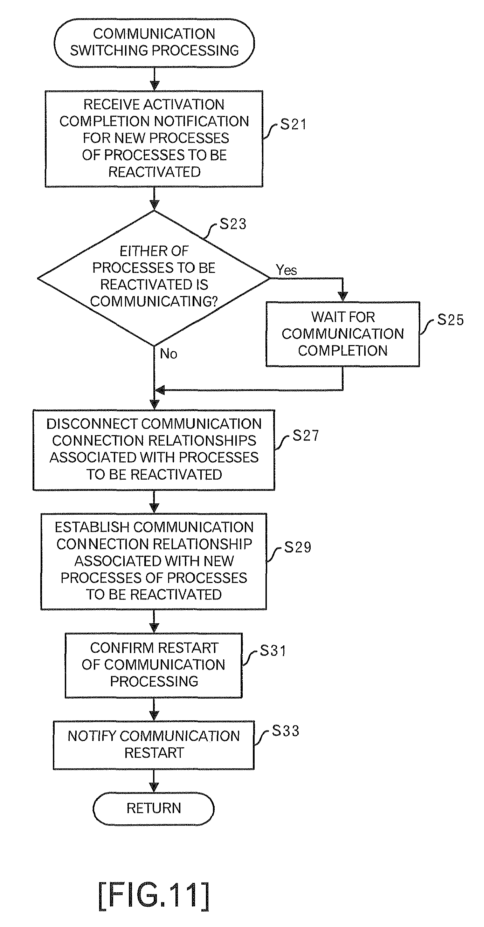

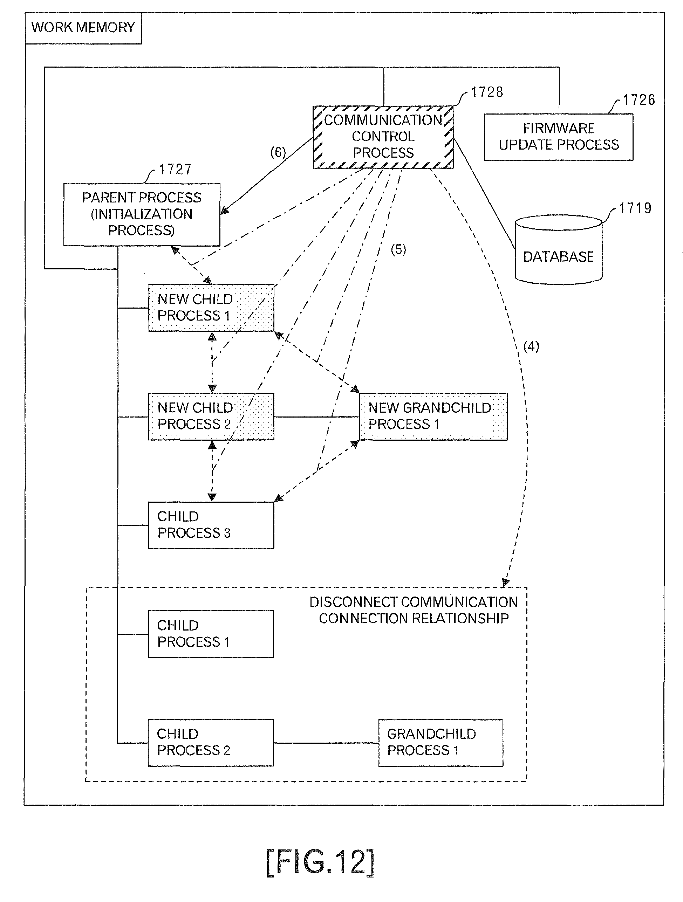

After receiving the activation completion notification from the parent process 1727, the communication control process 1728 performs a communication switching processing (step S19). After this, the processing moves to the processing illustrated in FIG. 13 by way of a terminal B. The communication switching processing will be explained using FIG. 11 and FIG. 12.

When being notified by the parent process 1727 about the activation completion of the new processes of the processes to be reactivated (step S21), the communication control process 1728 checks whether or not any one of the processes to be reactivated is currently performing the communication (step S23). The communication control process 1728 has a function for monitoring the communication, so it is possible to check whether or not any one of the processes to be reactivated is currently performing the communication. When the communication is in progress, the communication control process 1728 waits until that communication is complete (step S25). This is because when the communication connection relationship is forcibly disconnected during the communication, there is a possibility that the processing by the processes will be adversely affected.

When any of the processes to be reactivated does not perform the communication, or after the end of the communication has been detected at the step S25, the communication control process 1728 disconnects (or cuts) the communication connection relationships associated with the processes to be reactivated (step S27). In the example in FIG. 12, the communication control process 1728 disconnects the communication connection relationships in the ranges represented by dotted lines, or in other words, disconnects the communication connection relationship between the child process 1 and the child process 2, the communication connection relationship between the child process 2 and the child process 3, the communication connection relationship between the child process 1 and the parent process 1727, the communication connection relationship between the child process 1 and the grandchild process 1, and the communication connection relationship between the child process 3 and the grandchild process 1 (step (4)). The disconnection of the communication connection relationships at this step is carried out by closing connection ports, for example.

Then, the communication control process 1728 rebuilds communication connection relationships associated with the new processes of the processes to be reactivated (step S29). In the example in FIG. 12, the communication control process 1728 rebuilds the communication connection relationships between the new processes represented with hatching, and communication connection relationships with processes other than those new processes (step (5)). The configuration of processes that are generated from the modules handled in this embodiment does not change, so the communication control process 1728 is presumed to know all of the communication connection relationships between processes. When there is a large change in the process configuration, the communication control process 1728 no longer knows the communication connection relationships between processes, so the communication control process 1728 itself becomes a replacement process. Therefore, at the step S29, the communication connection relationships restored within a range known by the communication control process 1728 in association with the new processes. More specifically, a communication connection relationship is built between the new child process 1 and the parent process 1727. Moreover, a communication connection relationship is built between the new child process 1 and the new child process 2. Furthermore, a communication connection relationship is built between the new child process 2 and the child process 3. Also, a communication connection relationship is built between the new child process 1 and the new grand child process 1, anda communication connection relationship is built between the child process 3 and the new grandchild process 1. At this step, building the communication connection relationships is performed by opening connection ports, for example.

After that, the communication control process 1728 checks the restarting of the communication processing (step S31). For example, the communication control process 1728 performs a test communication, or actually transmits a JOB. When there are no problems, the communication control process 1728 sends the parent process 1727 communication restart notification (step S33). As schematically illustrated in FIG. 12, the communication restart notification is sent from the communication control process 1728 to the parent process 1727 (step (6)).

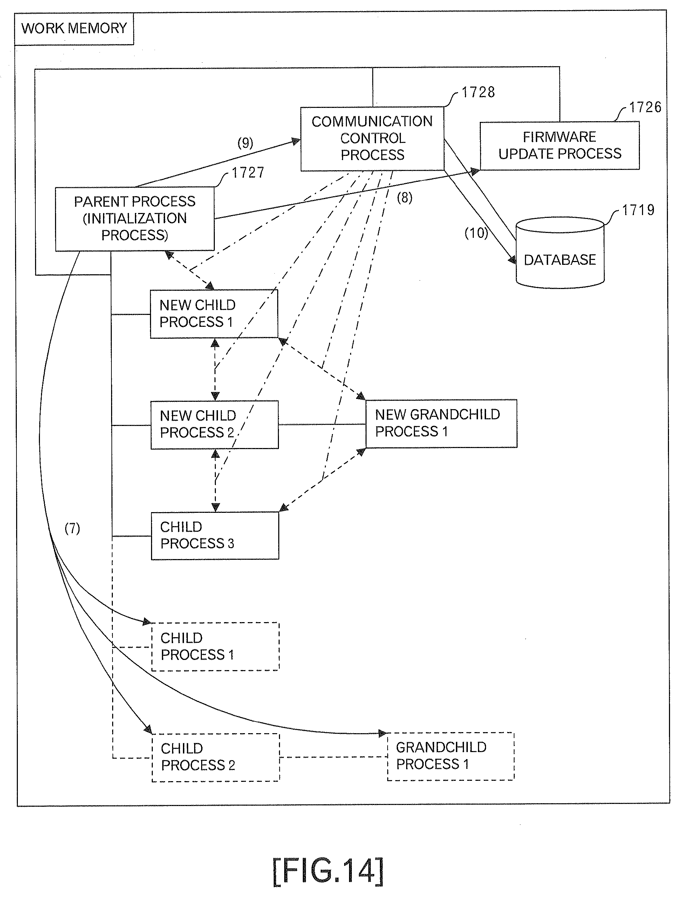

The processing then moves to the processing illustrated in FIG. 13 by way of a terminal B. The parent process 1727 to which the communication restart notification was sent instructs the processes to be reactivated (in other words, the old processes) to end (step S41). As schematically illustrated in FIG. 14, old child process 1, old child process 2 and old grandchild process 1 are deleted (step (7)). As a result, the parent process 1727 instructs the firmware update process 1726 to update the non-volatile memory B (174) on the standby side (step (8)).

Then, in response to an instruction from the parent process 1727, the firmware update process 1726 instructs and causes the hardware access driver 1730 or the like in the OS layer, for example, to perform an update of the non-volatile memory B (174) on the standby side using the update data (step S43). The processing of this step itself is the same as in the conventional case, so no further explanation will be given.

Moreover, the parent process 1727 notifies the communication control process 1728 that its own processing is complete (step (9)). The communication control process 1728 clears the communication history data (step S45 and step (10)). For example, the data illustrated in FIG. 7 becomes "empty" as illustrated in FIG. 15. As a result, when executing this processing next time, it becomes possible to suitably determine whether or not the interprocess communication has actually been performed.

By executing such a processing, as long as the communication control process 1728 and the parent process 1727 do not become processes tobe reactivated, rebooting to reactivate all of the processes becomes unnecessary. In other words, there is a higher possibility of being able to avoid a situation in which the operation is completely stopped and the monitoring of the main body apparatus 100, which is the function of the system control board 170, becomes impossible. Moreover, the time required for the update is shortened compared with a conventional update method, and it becomes more difficult for delays in the processing to occur. Furthermore, there is no need to add changes to the OS layer. In other words, the update can be achieved by only modules and processes in the application layer, and thus there is no need to consider affinity with the OS layer.

Although the embodiments were explained above, this technique is not limited to the embodiments. For example, an example in which the initialization process is the parent process was explained, however, one or plural processes other than the initialization process may carry out the aforementioned processing.

Furthermore, this technique can apply not only to a firmware recorded on the non-volatile memory but also to a program stored in an apparatus such as Hard Disk Drive. In such a case, only data of the program to be updated may be inputted as the update data.

Furthermore, this technique can apply not only to an apparatus such as a server but also to a control board monitoring a disk apparatus that includes a lot of Hard Disk Drive, for example.

The embodiments described above are summarized as follows:

A program relating to this embodiment causes a processor to execute a procedure including: (A) identifying a program to be updated among plural programs stored in a storage device in response to a program update instruction; (B) extracting a replacement process that is a process corresponding to the identified program to be updated and is included in plural processes activated by executing the plural programs and a communication destination process that has communicated with the replacement process and is included in the plural processes; (C) in response to updating with update data including a new program of the identified program to be updated, loading the new program onto a work memory to activate a first process to be substituted for the replacement process, and activating a second process to be substituted for the extracted communication destination process; (D) disconnecting communication connection relationships associated with the replacement process and the communication destinationprocess, and building communication connection relationship associated with the first process and the second process; and (E) terminating the replacement process and the communication destination process.

By executing this procedure, it becomes possible to reflect the update of the programs without rebooting the apparatus in which the plural processes are being executed.

In addition, the identifying, the extracting, the loading and activating, the disconnecting and building and the terminating may be executed by a process included in the plural processes. Instead of executing process replacement from an outside process other than the aforementioned plural processes, the replacement is carried out by its own management range, in other words, a process included in the aforementioned plural processes. Especially, when the aforementioned plural processes are processes in an application layer, the aforementioned processing can be conducted without changing an OS layer and the like.

Furthermore, the aforementioned extracting may include extracting a child process of the replacement process as the replacement process. This is because a process depending on the replacement process is also reactivated to be operated, appropriately. Moreover, the transient process may be excluded from the processes to be reactivated. The transient process is activated if necessary, and it is enough that the update for the program is reflected at the next activation.

Moreover, when a process that executes any one of the extracting, the loading and activating, the disconnecting and building and the terminating and is included in the plural processes is not the replacement process or the communication destination process, the loading and activating and subsequent processing may be executed. When the aforementioned condition is not satisfied, it is preferable that all processes are reactivated because the large-scale update is made.

Furthermore, the aforementioned storage device may be a rewritable non-volatile memory. In such a case, the rewritable non-volatile memory may be duplicated. Then, a rewritable non-volatile memory updated with the update data in the loading and activating may be a memory on an operating side. Moreover, the procedure may further include rewriting a standby side of the rewritable non-volatile memory with the update data after the terminating. When the non-volatile memory is duplicated, it becomes possible to appropriately continue the processing by updating the non-volatile memory in this order.

A control board in this embodiment includes a processor; a rewritable non-volatile memory recording plural programs; and a work memory. Then, a program included in the plural programs causes a processor to execute a procedure including: (A) extracting a program to be rewritten among the plural programs stored in a storage device in response to a rewrite instruction for the rewritable non-volatile memory; (B) extracting a replacement process that is a process corresponding to the extracted program to be rewritten and is included in plural processes activated by executing the plural programs and a communication destination process that has communicated with the replacement process and is included in the plural processes; (C) in response to rewriting the rewritable non-volatile memory with update data including a new program of the extracted program to be rewritten, loading the new program onto a work memory to activate a first process to be substituted for the replacement process, and activating a second process to be substituted for the extracted communication destination process; (D) disconnecting communication connection relationships associated with the replacement process and the communication destination process, and building communication connection relationship associated with the first process and the second process; and (E) terminating the replacement process and the communication destination process.

It becomes possible to reflect the update of the program without stopping the operations of such a control board.

Incidentally, it is possible to create a program causing a processor to execute the aforementioned processing, and such a program is stored in a computer readable storage medium or storage device such as a flexible disk, CD-ROM, DVD-ROM, magneto-optic disk, a semiconductor memory, and hard disk. In addition, the intermediate processing result is temporarily stored in a storage device such as a main memory or the like.

## Claims

1. A program for causing a processor to execute a procedure, comprising:
identifying a program to be updated among a plurality of programs stored in a storage device in response to a program update instruction;
extracting a replacement process that is a program corresponding to the identified program to be updated and is included in a plurality of processes activated by executing the plurality of programs and a communication destination process that has communicated with the replacement process and is included in the plurality of processes;
in response to updating with update data including a new program of the identified program to be updated, loading the new program onto a work memory to activate a first process to be substituted for the replacement process, and activating a second process to be substituted for the extracted communication destination process;
disconnecting communication connection relationships associated with the replacement process and the communication destination process, and building communication connection relationship associated with the first process and the second process; and
terminating the replacement process and the communication destination process.

2. The program as set forth in claim 1, wherein the identifying, the extracting, the loading and activating, the disconnecting and building and the terminating are executed by a program included in the plurality of processes.

3. The program as set forth in claim 1 or 2, wherein the extracting comprises extracting a child process of the replacement process as the replacement process.

4. The program as set forth in any one of claims 1 to 3, wherein, when a process that executes any one of the extracting, the loading and activating, the disconnecting and building and the terminating and is included in the plurality of processes is not the replacement process or the communication destination process, the loading and activating and subsequent processing are executed.

5. The program as set forth in any one of claims 1 to 4, wherein the storage device is a rewritable non-volatile memory, the rewritable non-volatile memory is duplicated, and a rewritable non-volatile memory updated with the update data in the loading and activating is a memory on an operating side, and
the procedure further comprises rewriting a standby side of the rewritable non-volatile memory with the update data after the terminating.

6. A control board, comprising:
a processor;
a rewritable non-volatile memory recording a plurality of programs; and
a work memory;
wherein a program causes the processor to execute a procedure, comprising:
extracting a program to be rewritten among the plurality of programs in response to a rewrite instruction for the rewritable non-volatile memory;
extracting a replacement process that is a program corresponding to the extracted program to be rewritten and is included in a plurality of processes activated by executing the plurality of programs and a communication destination process that has communicated with the replacement process and is included in the plurality of processes;
in response to rewriting the rewritable non-volatile memory with update data including a new program of the extracted program to be rewritten, loading the new program onto the work memory to activate a first process to be substituted for the replacement process, and activating a second process to be substituted for the extracted communication destination process;
disconnecting communication connection relationships associated with the replacement process and the communication destination process, and building communication connection relationship associated with the first process and the second process; and
terminating the replacement process and the communication destination process.
